# EUROPEAN PATENT APPLICATION

(11) **EP 1 669 620 A1**
(43) Date of publication of application: **14.06.2006**
(21) Application number: 04745787.4
(22) Date of filing: 11.06.2004
(51) Int. Cl.: F16C 41/00, F16C 43/04, G01D 5/245

(54) **ROLLER BEARING WITH ENCODER AND ITS MANUFACTURING METHOD**

(30) Priority: 24.06.2003 JP 2003178994
(71) Applicant: NSK Ltd., Tokyo 141-8560 (JP)
(72) Inventor: MAEDA, T., NSK LTD., Fujisawa-shi, Kanagawa 2510021 (JP)
(74) Representative: Shanks, Andrew
(86) International application number: PCT/JP2004/008193
(87) International publication number: WO 2004/113751

(57) **Abstract**

A rotational speed can be reliably detected at low cost by stabilizing the density of a magnetic flux coming from a permanent magnet encoder 10b and reaching a detection portion of a sensor 29. The residual magnetic flux densities of an inner ring 1, an outer ring 14, and balls 5 each made of a magnetic material, are individually 0.2mT or less, and in total 2mT or less when assembled into a rolling bearing unit. Therefore, the magnetic flux coming from the encoder 10b is hardly affected by the residual magnetic flux of the rolling bearing unit.

## Description

### Technical Field

A rolling bearing unit with an encoder, being the object of the present invention, is used for rotatably supporting an automobile wheel with respect to a suspension system, and for constituting a rotational speed detector for detecting the rotational speed of the wheel.

### Background of the Invention

In order to control an Anti-lock Brake System (ABS) or a Traction Control System (TCS), it is necessary to detect the rotational speed of the wheel. Therefore, a rolling bearing unit with a rotational speed detector is required in order to rotatably support the wheel with respect to the suspension system and to detect the rotational speed of the wheel. As such a rolling bearing unit with a rotational speed detector, structures as described in, for example, Japanese Unexamined Patent Publication No. H6-281018, Japanese Unexamined Patent Publication No. H9-203415, U.S. Patent No. 4,948,277, Japanese Unexamined Patent Publication No. H11-23596, have been heretofore known.

FIG. 5 shows a rolling bearing unit with a rotational speed detector described in U.S. Patent No. 4,948,277. A pair of inner rings 1 being respective stationary rings, are externally fitted to a shaft (not shown) which is not rotated when assembled into the suspension system. Inner ring raceways 2 being respective fixed raceway surfaces, are respectively formed on the outer peripheral surfaces of the inner rings 1. Double row outer ring raceways 4 being respective rotational raceway surfaces, are formed on the inner peripheral surface of a hub 3 being the rotating ring which rotates in use. A plurality of balls 5 being respective rolling elements, are provided between the outer ring raceways 4 and the inner ring raceways 2, so as to rotatably support the hub 3 around the shaft. A vehicle wheel (not shown) is fixed to a flange provided on the outer peripheral surface of the hub 3.

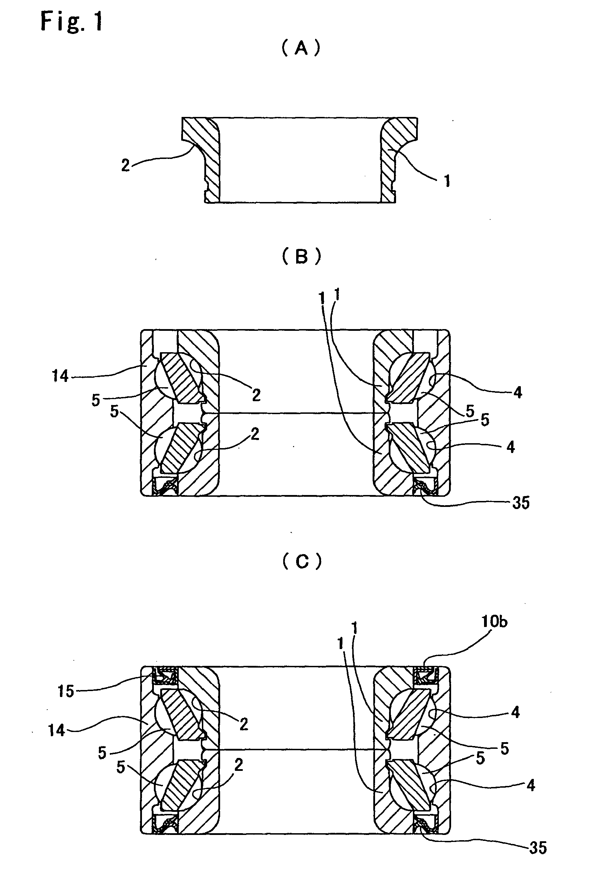

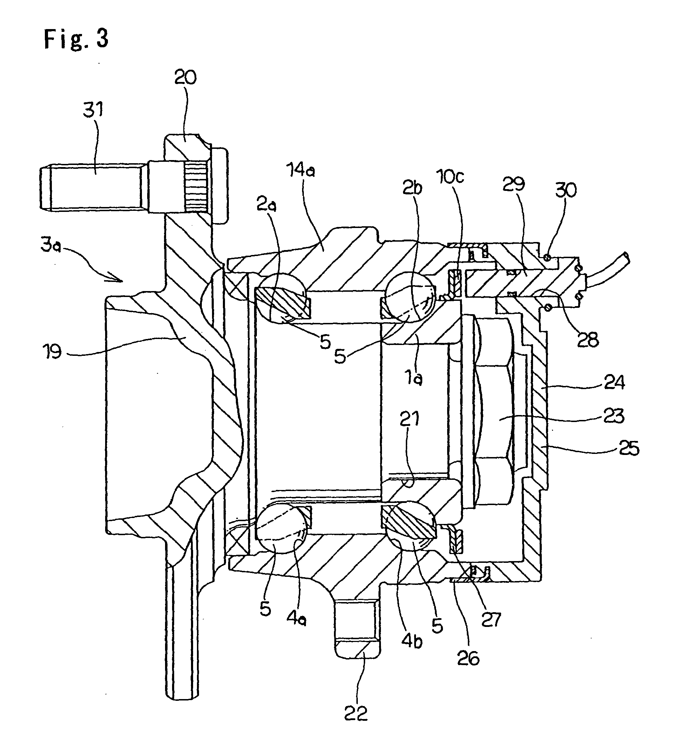

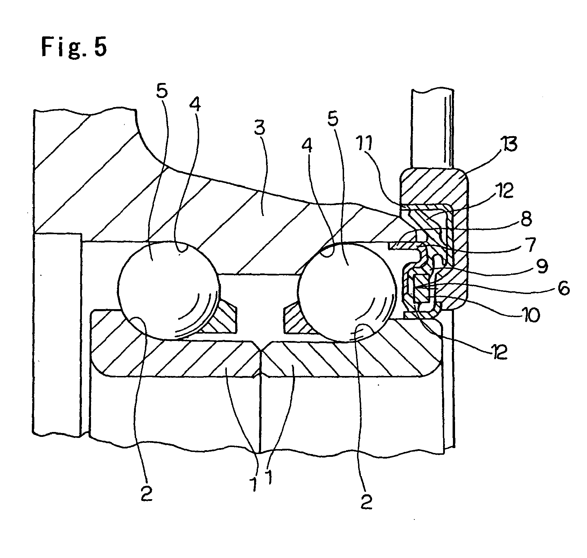

A core metal 7 constituting a seal ring 6 is internally secured to the opening of the inside end of the hub 3 ("inside" means the side towards the widthwise center when assembled in the vehicle; the top in FIG 1 and the right in FIG. 3 to 6, while conversely, the side towards the widthwise outside of the vehicle is deemed "outside"; the bottom in FIG. 1 and the left in FIG. 3 to 6. However, the inside and outside are suitably selected in terms of design according to the structure of the vehicle suspension system and the like.). That is, a cylinder portion 8 formed on the outer peripheral rim portion of this core metal 7 is internally secured to the opening of the hub 3 by interference fit. A sealing member 9 made from an elastic material such as a rubber or the like, is fixed to and supported on the inside surface of the core metal 7. Furthermore, an encoder 10 is fixed to and supported on the inside surface of this sealing member 9. The encoder 10 is made from a permanent magnet, and is formed in an annular shape wherein south poles and north poles are arranged alternately around the circumferential direction.

On the other hand, a retaining ring 11 formed by drawing a metal plate, is externally secured to the inside end of the inner ring 1 which, of the pair of the inner rings 1, is on the inside. Tip rims of a plurality of seal lips 12 provided on the sealing member 9 constituting the seal ring 6 are slidably in contact with the inner and outer peripheral surfaces and the outside surface of the retaining ring 11, so as to keep dust or rain drops from entering the installation section of the balls 5. Moreover, a sensor 13 is supported on and secured to a part of the retaining ring 11, such that a detection portion of the sensor 13 faces the inside surface of the encoder 10.

In the rolling bearing unit with the rotational speed detector described above, a wheel fixed to the hub 3 can be rotatably supported with respect to the shaft which supports the inner ring 1 being externally fitted thereto. When the hub 3 is rotated together with the wheel, the output from the sensor 13 facing the side surface of the encoder 10 fixed to this hub 3 changes. The frequency responding to the change in the output from the sensor 13 is in proportion to the rotational speed of the wheel. Consequently, if the output signal from the sensor 13 is input to a controller (not shown), the rotational speed of the wheel can be obtained and the ABS and TCS can be suitably controlled.

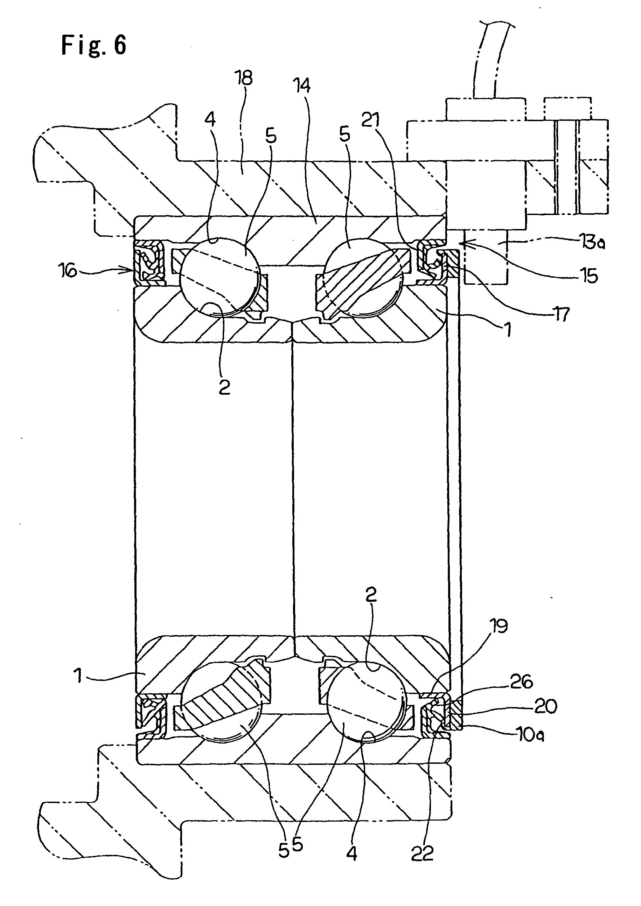

FIG. 6 shows a rolling bearing unit with a rotational speed detector described in Japanese Unexamined Patent Publication No. H9-203415. In this example, conversely from the abovementioned first example of the conventional structure, the inner rings 1 being the respective rotating rings, where the inner ring raceways 2 being the rotational raceway surfaces are formed on the outer peripheral surface, are externally secured to the shaft which rotates in use. The outer ring 14 being the stationary ring which does not rotate in use, is concentrically arranged around the respective inner rings 1. The plurality of balls 5 being rolling elements, are provided between the outer ring raceways 4 being the fixed raceway surfaces formed on the inner peripheral surface of the outer ring 14, and the inner ring raceways 2, such that the inner rings 1 is rotatably supported on the inner side of the outer ring 14.

A combination seal ring 15 is provided between the inner peripheral surface of the inside end of the outer ring 14 and the outer peripheral surface of the inside end of the inside inner ring 1 of the two inner rings, so as to seal the inside end opening of the space existing between the inner peripheral surface of the outer ring 14 and the outer peripheral surface of the inside inner ring 1. Moreover, another combination seal ring 16 is provided between the inner peripheral surface of the outside end of the outer ring 14 and the outer peripheral surface of the outside end of the outside inner ring 1 of the two inner rings, so as to seal the outside end opening of the space existing between the inner peripheral surface of the outer ring 14 and the outer peripheral surface of the outside inner ring 1. A permanent magnet encoder 10a is additionally installed on the inside surface of a slinger 17 constituting a combination seal ring 15 which, of the two combination seal rings 15 and 16, is provided on the inside. Moreover, a detection portion of the sensor 13a which is supported on a holding case 18 constituting the suspension system, faces the inside surface of the encoder 10a. In such a second example of the conventional structure, using this sensor 13a, the rotational speed of the inner rings 1 rotating together with the shaft (not shown) can be detected and the ABS and TCS can be suitably controlled. FIG. 6 shows the structure wherein the wheel is supported on a dependent suspension system. However, a rolling bearing unit wherein the wheel is supported on an independent suspension system, has been heretofore known as described in Japanese Unexamined Patent Publication No. H11-23596.

In the conventional structures described in the abovementioned Patent Documents, the effect of residual magnetism of the component members of the rolling bearing unit is not particularly considered. The component members of these rolling bearing units are mostly made from magnetic metals such as bearing steel. Therefore, due to the residual magnetism of these components, there is a likelihood of an increase in cost which is necessary to ensure the reliability of detecting the rotational speed of the encoder 10, 10a by the sensor 13, 13a.

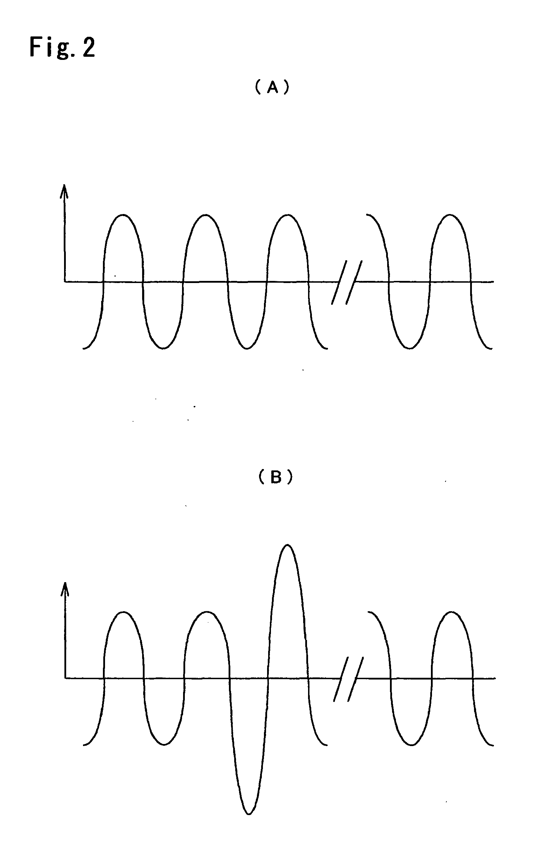

For example, a case is considered where the residual magnetic flux density of a portion of the components is increased, and the magnetic flux flowing based on the residual magnetism of the portion, and the magnetic flux coming from the detection surface (the inside surface) of the encoder 10, 10a have the same direction and are overlapped on each other. In this case, as shown in FIG. 2 (B), the density of the magnetic flux reaching the detection portion of the sensor 13, 13a becomes higher at a part around the circumferential direction of the detection surface of the encoder 10, 10a than at the other portions. Although not illustrated, in the case where the magnetic flux flowing based on the residual magnetism, and the magnetic flux coming from the detection surface (the inside surface) of the encoder 10, 10a have opposite directions and are overlapped on each other, the density of the magnetic flux reaching the detection portion of the sensor 13, 13a becomes lower at a part around the circumferential direction of the detection surface of the encoder 10, 10a than at the other portions.

If in this manner, based on the residual magnetism of the portion of the components, the density of the magnetic flux reaching the detection portion of the sensor 13, 13a changes from the density of the magnetic flux coming from the detection surface of the encoder 10, 10a due to different factors, it becomes difficult to ensure the reliability of detecting the rotational speed of the encoder 10, 10a. Specifically, it becomes necessary to strictly control the threshold related to the intensity of the detection signal from the sensor 13, 13a, which increases the cost of the controller for processing the signal from the sensor 13, 13a.

The rolling bearing unit with an encoder and the manufacturing method therefor of the present invention takes such problems into consideration.

### Summary of the Invention

A rolling bearing unit with an encoder of the present invention comprises: a stationary ring made from a magnetic material which does not rotate in use; a rotating ring made from a magnetic material which rotates in use; a plurality of rolling elements which are arranged between a rotational raceway surface formed on this rotating ring, and a fixed raceway surface formed on the above stationary ring; and an encoder which is supported on a portion of the rotating ring concentrically with the rotating ring. The encoder comprises a multipolar magnet in an annular shape wherein south poles and north poles are arranged alternately around the circumferential direction.

In particular, in the rolling bearing unit with an encoder, component members made from magnetic materials, constituting the rolling bearing unit including the stationary ring and the rotating ring are demagnetized before the encoder is supported on the rotating ring.

Preferably, magnetic flux densities after demagnetization of the members made from magnetic materials constituting the rolling bearing unit are 0.5mT (5G) or less for each of the component members, and 2mT (20G) or less for the whole of the component members when assembled into the rolling bearing unit.

More preferably, a density of a magnetic flux coming from a detection surface of the encoder is 10mT (100G) or more.

One aspect of a manufacturing method of a rolling bearing unit with an encoder of the present invention, for manufacturing the aforementioned rolling bearing unit with an encoder, comprises demagnetizing the respective component members constituting the rolling bearing unit with an encoder, then assembling these members to make the rolling bearing unit, and then assembling the encoder into the rotating ring of this rolling bearing unit.

Furthermore, another aspect of the manufacturing method of a rolling bearing unit with an encoder of the present invention, for manufacturing the aforementioned rolling bearing unit with an encoder, comprises assembling the respective component members to constitute the rolling bearing unit, then demagnetizing the rolling bearing unit, and then assembling the encoder into the rotating ring of the rolling bearing unit.

The operation when rotatably supporting a wheel by the rolling bearing unit with an encoder of the present invention constituted as described above, and detecting the rotational speed of the wheel fixed on the rotating ring in combination with the sensor, is similar to that for a rolling bearing unit with an encoder constituting the abovementioned conventional rolling bearing unit with a rotational speed detector.

In particular, in the case of the rolling bearing unit with an encoder of the present invention, the density of the magnetic flux coming from the rolling bearing unit constituted including members made from magnetic materials, is kept low. Therefore, the density of the magnetic flux reaching the detection portion of the sensor provided facing to the detection surface of the encoder can be stabilized (sized to correspond to the density of the magnetic flux coming from the detection surface of the encoder). As a result, the rotational speed of the rotating ring can be accurately measured without strictly controlling the threshold related to the intensity of the detection signal from the sensor.

### Brief Description of the Drawings

FIG. 1 is a cross-sectional view showing a first example of an embodiment of the present invention in the order of assembling steps.
FIG. 2 is a diagram showing two examples of the density of magnetic flux coming from an encoder and reaching a detection portion of a sensor.
FIG. 3 is a cross-sectional view showing a second example of the embodiment of the present invention.
FIG. 4 is a cross-sectional view showing a third example of the embodiment of the present invention.
FIG. 5 is a partial cross-sectional view showing a first example of a conventional structure.
FIG. 6 is a cross-sectional view showing a second example of a conventional structure.

### Detailed Description of the Invention

FIG. 1 shows a first example of an embodiment of the present invention. Since the structure shown in the drawing is similar to that of the abovementioned second example of the conventional structure shown in FIG. 6, the same reference symbols are used for equivalent components or portions, and repeated description is omitted. Hereunder, the description is focused on the characteristics of the present invention.

In the present example, firstly as shown in FIG. 1 (A), the respective magnetic material component members such as an inner ring 1 constituting the rolling bearing unit are demagnetized, so that the residual magnetic flux densities of these components are decreased to 0.5mT or less.

Next, the respective component members having the residual magnetic flux densities 0.5mT or less, that is, a pair of the inner rings 1, an outer ring 14, a plurality of balls 5, and one seal ring 35 are combined to make a rolling bearing unit as shown in FIG. 1 (B). In this condition, the overall residual magnetic flux density of the rolling bearing unit is kept to 2mT or less.

Then, lastly, a combination seal ring 15 installed with a permanent magnet encoder 10b is installed between the inner rings 1 and the outer ring 14.

The demagnetizing treatment need not necessarily be applied to each component member separately. It is also possible to apply the demagnetizing treatment to the rolling bearing unit in the condition where these component members which have not been subjected to the demagnetizing treatment are assembled to make the rolling bearing unit. In this case also, the overall residual magnetic flux density of the rolling bearing unit is kept to 2mT or less.

In the case of the rolling bearing unit with an encoder constituted and assembled as described above, the density of the magnetic flux coming from the rolling bearing unit comprising the pair of inner rings 1, the outer ring 14, and the balls 5, which are each made from magnetic material, can be kept low. Therefore, as shown in FIG. 2 (A), the density of the magnetic flux reaching the detection portion of the sensor 13a (refer to FIG. 6) which is provided facing the detection surface of the encoder 10b, can be stabilized.

That is, the magnetic flux coming from the rolling bearing unit is not added to the magnetic flux coming from the detection surface of the encoder 10b, nor does it offset the magnetic flux coming from the detection surface, or if it does the degree is very low. Therefore, the density of the magnetic flux reaching the detection portion of the sensor 13 can be sized to correspond to the density of the magnetic flux coming from the detection surface of the encoder 10b. As a result, the rotational speed of the respective inner rings 1 being the rotating rings, can be accurately measured without strictly controlling the threshold related to the intensity of the detection signal from the sensor 13.

More specifically, the density of the magnetic flux coming from the detection surface of the encoder 10b constituting the rotational speed detector for detecting the rotational speed of the vehicle wheel, is 10mT (100G) or more, and generally about 150mT (1500G). Consequently, even if the residual magnetic flux density of the inner ring 1 supporting the encoder is about 0.5mT, and furthermore the residual magnetic flux density of the rolling bearing unit including the inner rings 1 is about 2mT, the effect from this residual magnetic flux on the density of the magnetic flux coming from the detection surface can be kept as little as possible. Therefore, the variation (amplitude) of the output signal from the sensor 13a can be kept approximately constant, thus facilitating the processing for accurately measuring the rotational speed of the respective inner rings 1.

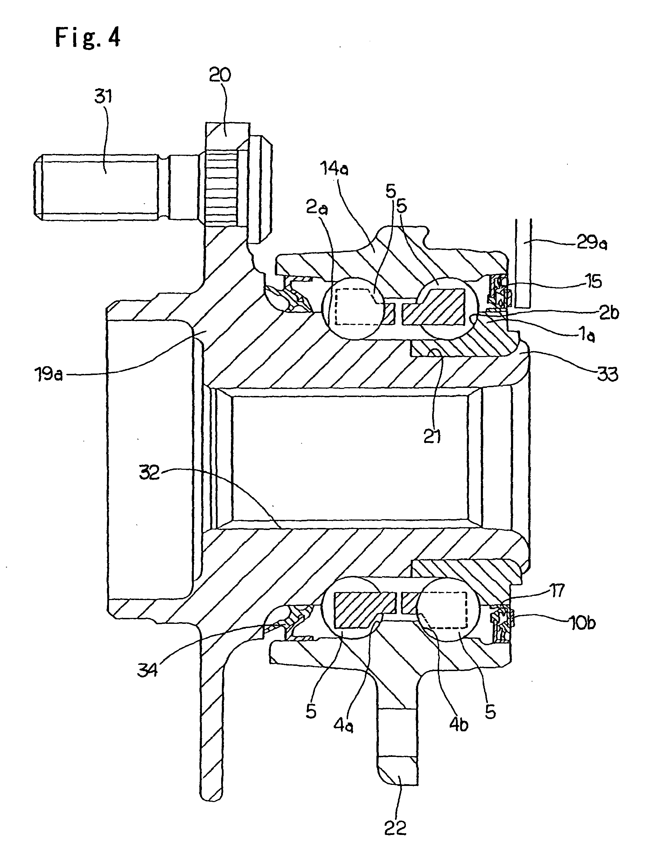

Next, FIG. 3 and 4 show second and third example of the embodiment of the present invention. In the first example described above, the present invention is applied to the rolling bearing unit for supporting a wheel on a dependent suspension system, whereas in these respective examples is shown the case where the present invention is applied to a rolling bearing unit for supporting a wheel on an independent suspension system.

Firstly, in the second example shown in FIG. 3, the basic structure illustrated is same as the structure described in Japanese Unexamined Patent Publication No. H11-23596. In the case of this example, the rolling bearing unit is such that a hub 3a comprising a hub main body 19 and an inner ring 1a is rotatably supported on the inner diameter side of an outer ring 14a. A rotation side flange 20 for attaching a wheel is provided on the outer peripheral surface of the outside end of a hub main body 19, and a first inner ring raceway 2a is provided on the outer peripheral surface of the middle portion thereof. Moreover, an inner ring 1a has a second inner ring raceway 2b on the outer peripheral surface, and is externally fitted to a stepped portion 21 which is formed on the portion near to the inside end of the hub main body 19 and has a smaller outer diameter than the portion where the first inner ring raceway 2a is provided. Furthermore, a first outer ring raceway 4a facing the first inner ring raceway 2a and a second outer ring raceway 4b facing the second inner ring raceway 2b are formed on the inner peripheral surface of the outer ring 14a, and a fixed side flange 22 for supporting the outer ring 14a on the suspension system is formed on the outer peripheral surface thereof. A plurality of balls 5 being rolling elements, are provided respectively between the first and second inner ring raceways 2a and 2b and the first and second outer ring raceways 4a and 4b, so as to rotatably support the hub 3a on the inner diameter side of the outer ring 14. In a condition with the inner ring 1a externally fitted to the stepped portion 21, a nut 23 is screwed onto a male screw portion formed on the inside end of the hub main body 19, to press against the inner ring 1a, so as to keep the inner ring 1a and the hub main body 19 from being separated.

Moreover, the opening on the inside end (right end in FIG. 3) of the outer ring 14a is closed by a cover 24. The cover 24 comprises a bottomed-cylindrical main body 25 which is formed from a synthetic resin by injection molding, and a fitting cylinder 26 which is connected to the opening of the main body 25. The fitting cylinder 26 is connected to the opening of the main body 25 by molding its base end when injection molding the main body 25. The cover 24 constituted in this manner closes off the inside end opening of the outer ring 14a, by externally securing the tip half portion (left half portion in FIG. 3) of the fitting cylinder 26 to the inside end of the outer ring 14a, by interference fit.

Moreover, a permanent magnet encoder 10c is supported on a portion of the outer peripheral surface of the inside end portion of the inner ring 1a which is externally secured to the of the inside end portion of the hub main body 19, being a portion out of the second inner ring raceway 2b, via a supporting ring 27 made from a magnetic metal plate. This support ring 27 is formed into an overall annular shape of L-shape in cross-section, by bending a magnetic metal plate such as SPCC, and is externally secured to the inside end portion of the inner ring 1a. The encoder 10c is made from a rubber mixed with ferrite powder and onto the inside surface of an annular portion constituting the support ring 27 by baking for example. This encoder 10c is magnetized for example in the axial direction (left and right direction in FIG. 3), and the magnetization direction is changed alternately at equal intervals around the circumferential direction. Consequently, south poles and north poles are arranged alternately at equal intervals around the circumferential direction on the inside surface of the encoder 10c, being the portion to be detected.

Moreover, an insertion hole 28 is formed in a part of the main body 25 which constitutes the cover 24, in a portion facing the inside surface of the encoder 10c, piercing the main body 25 along the axial direction of the outer ring 14a. A detection portion of a sensor 29 (including a sensor unit comprising a detecting element and the like embedded in a synthetic resin) is inserted into the insertion hole 28, and is pressed by a coupling spring 30. The sensor 29 comprises, embedded in a synthetic resin: an IC which incorporates a magnetic detecting element such as a hall element, or a magnetoresistance element (MR element) for which the characteristics change according to the flow direction of the magnetic flux, and a waveform shaping circuit for shaping the output waveform from the magnetic detecting element; and a pole piece made from a magnetic material for guiding the magnetic flux flowing out from the encoder 10c (or flowing into the encoder 10c), to the magnetic detecting element.

When using the aforementioned rolling bearing unit with a rotational speed detector, the fixed side flange 22 fixed on the outer peripheral surface of the outer ring 14a is connected and fixed to the suspension system by bolts (not shown), and the wheel is fixed to the rotation side flange 20 fixed on the outer peripheral surface of the hub main body 19, by studs 31 provided on this rotation side flange 20, so that the wheel is rotatably supported on the suspension system. When the wheel is rotated in this condition, the north poles and south poles existing on the inside surface of the encoder 10c alternately pass through the vicinity of the end surface, being the detection portion, of the sensor 29. As a result, the direction of the magnetic flux flowing within the sensor 29 is changed, so that the output from the sensor 29 is changed. The frequency responding to the output from the sensor 29 being changed in this manner, is proportional to the rotational speed of the wheel. Consequently, if the output from the sensor 29 is sent to a controller (not shown), an ABS or TCS can be suitably controlled.

If the present invention is applied to a rolling bearing unit with an encoder having such a structure, the demagnetizing treatment is applied so that residual magnetic flux densities of the respective component members made from magnetic materials constituting the rolling bearing unit, that is, the inner ring 1a, the hub main body 19, the outer ring 14a, the balls 5, the nut 23, and the fitting cylinder 26 are decreased to 0.5mT or less. Moreover, the overall residual magnetic flux density of the rolling bearing unit is kept to 2mT or less. Similarly to the abovementioned first example, the demagnetizing treatment may be applied to this rolling bearing unit in a condition where these component members which have not been subjected to the demagnetizing treatment, are assembled to make the rolling bearing unit.

In any case, the support ring 27 attached with the encoder 10c is externally secured to the inner ring 1a of the rolling bearing unit having the residual magnetic flux density kept to 2mT or less.

In the case of this example also, the density of the magnetic flux coming from the encoder 10c and reaching the detection portion of the sensor 29 can be stabilized so that the rotational speed can be detected highly reliably at low cost.

Next is a description of the third example of the embodiment of the present invention shown in FIG 4. While the abovementioned second example was in relation to the structure for supporting a non-driven wheel (front wheel of a front-engine rear-drive vehicle and rear-engine rear-drive vehicle, and rear wheel of a front-engine front-drive vehicle), the present example is in relation to the structure for supporting a driven wheel (rear wheel of a front-engine rear-drive vehicle and rear-engine rear-drive vehicle, front wheel of a front-engine front-drive vehicle, and all wheels of a four-wheel drive vehicle). Therefore, in the present example, a spline hole 32 for engaging with a spline shaft of a constant velocity universal joint is provided in the center of the hub main body 19a. Moreover, the inner ring 1a which is externally fitted to the inside end portion of the hub main body 19a, is pressed by a crimped portion 33 formed on the inside end portion of the hub main body 19a.

Furthermore, a gap between the inner peripheral surface of the outside end portion of the outer ring 14a and the outer peripheral surface of the middle portion of the hub main body 19a is closed by a seal ring 34 internally secured to the outside end portion of the outer ring 14a. A gap between the inner peripheral surface of the inside end portion of the outer ring 14a and the outer peripheral surface of the inside end portion of the inner ring 1a is closed by a combination seal ring 15 which is similar to that of the abovementioned example 1. A permanent magnet tone wheel 10b is attached to the inside surface of a slinger 17 constituting the combination seal ring 15. Furthermore, a detection portion of a sensor 29a which is supported on a part of the suspension system such as a knuckle, faces the inside surface of the tone wheel 10b.

Also in the case where the present invention is applied to the rolling bearing unit with an encoder having such a structure, the demagnetizing treatment is applied so that residual magnetic flux densities of the respective component members made from magnetic materials constituting the rolling bearing unit, that is, the inner ring 1a, the hub main body 19a, the outer ring 14a, and the balls 5 are decreased to 0.5mT or less. Moreover, the overall residual magnetic flux density of the rolling bearing unit is kept to 2mT or less. Similarly to the abovementioned first and second examples, the demagnetizing treatment may be applied to the rolling bearing unit in a condition where these component members which have not been subjected to the demagnetizing treatment, are assembled to make the rolling bearing unit.

In any case, the combination seal ring 15 including the slinger 17 attrached with the encoder 10b is externally secured to the inner ring 1a of the rolling bearing unit having the residual magnetic flux density kept to 2mT or less.

In the case of this example also, the density of the magnetic flux coming from the encoder 10b and reaching the detection portion of the sensor 29a can be stabilized so that the rotational speed can be detected highly reliably at low cost.

### Industrial Applicability

A rolling bearing unit with an encoder and a manufacturing method therefor of the present invention is constituted and operated as described above. Since the rotational speed can be detected highly reliably at low cost, the present invention can contribute to the popularization and high performance of apparatus such as an ABS, a TCS and the like for stabilizing the operation of various vehicles.

## Claims

1. A rolling bearing unit with an encoder comprising:
a stationary ring made from a magnetic material which does not rotate in use;
a rotating ring made from a magnetic material which rotates in use;
a plurality of rolling elements which are arranged between a rotational raceway surface formed on the rotating ring, and a fixed raceway surface formed on the stationary ring; and
an encoder which is supported on a part of the rotating ring concentrically with the rotating ring, the encoder comprising a multipolar magnet in an annular shape wherein south poles and north poles are arranged alternately around the circumferential direction,
wherein component members made from a magnetic material, constituting the rolling bearing unit including the stationary ring and the rotating ring are demagnetized before the encoder is supported on the rotating ring.

2. A rolling bearing unit with an encoder according to claim 1, wherein magnetic flux densities after demagnetization of the component members made from a magnetic material constituting the rolling bearing unit are 0.5mT or less for each of component members, and 2mT or less for the whole of the component members when assembled into the rolling bearing unit.

3. A rolling bearing unit with an encoder according to claim 1 or 2, wherein a density of a magnetic flux coming from a detection surface of the encoder is 10 mT or more.

4. A manufacturing method for a rolling bearing unit with an encoder, for manufacturing a rolling bearing unit with an encoder according to any one of claim 1 through claim 3, comprising demagnetizing respective component members constituting the rolling bearing unit with an encoder, then assembling these component members to make the rolling bearing unit, and then assembling the encoder onto the rotating ring of the rolling bearing unit.

5. A manufacturing method for a rolling hearing unit with an encoder, for manufacturing a rolling bearing unit with an encoder according to any one of claim 1 through claim 3, comprising assembling respective component members to constitute a rolling bearing unit, then demagnetizing the rolling bearing unit, and the assembling the encoder onto the rotating ring of the rolling bearing unit.
